# EUROPEAN PATENT SPECIFICATION

(11) **EP 0 663 280 B1**
(45) Date of publication and mention of the grant of the patent: **13.05.1998**
(21) Application number: 92914083.8
(22) Date of filing: 01.07.1992
(51) Int. Cl.: B29C 65/40, B29C 65/42, B29C 65/70, B29C 33/10, B68G 7/05

(54) **DEVICE FOR BONDING AND MOLDING SEAT**
VORRICHTUNG ZUM FORMEN UND VERBINDEN VON SITZEN
SYSTEME DE COLLAGE ET DE MOULAGE DE SIEGES

(30) Priority: 02.07.1991 JP 187051/91
(43) Date of publication of application: 19.07.1995
(73) Proprietor: ARAKO CORPORATION, Aichi 473 (JP); TAKASAGO THERMAL ENGINEERING CO. LTD., Tokyo 101 (JP)
(72) Inventor: NISHIOKA, Haruo, Room 206, Mansion Hana, Osaka-shi, Osaka 535 (JP); KOIE, Kazunari, Tokoname-shi, Aichi 476 (JP); HAYASHI, Nobuhiro, Nagoya-shi, Aichi 454 (JP); HIRATA, Sinji, Toyota-shi, Aichi 470-03 (JP); TATESHIMA, Toshiyuki, Nagoya-shi, Aichi 463 (JP); AKAGAWA, Mitsuyoshi, Kariya-shi, Aichi 448 (JP); SASAKI, Kouichi, Nagoya-shi, Aichi 464 (JP)
(74) Representative: Wagner, Karl H., Dipl.-Ing.
(86) International application number: JP9200830
(87) International publication number: WO9301044

(56) References cited:
- JP-A- 2 103 126
- JP-A- 3 236 889
- JP-A-62 146 614

## Description

### Field of the Invention

The invention relates to an apparatus for adhesively bonding and molding seat suitable for use in the production of an automobile seat.

### Prior Art

When producing seat products in a continuous production line, there is frequently utilized a step of adhesively bonding and molding in which a fibrous outer material for the seat is adhesively bonded onto a surface of a resilient inner material for the seat by means of an adhesive.

For this adhesion, reactive hot melt adhesives (thermosoftening adhesives) which may be softened and develop an adhesive function when heated above certain temperatures. For example, as known in the art, reactive hot melt adhesives of urethane type may be softened and develop an adhesive function when heated to about 60 °C. in humid air. If a pressure is applied in this case, the softened adhesive may penetrate into voids or cells of the adherent materials to provide an improved adhesion.

When adhesively bonding an inner material for the seat to an outer material for the seat, it is necessary to adequately supply heat and humidity to apply pressure.

The step of adhesive bonding and molding has heretofore been carried out by pressing together adherents under supply of hot and highly humid air. For example, a semi-finished seat product that is an assembly comprising an inner material for the seat, an outer material for the seat and an adhesive as mentioned above interposed between the inner and outer seat materials is securely placed on a fixed mold half, and pressed against the fixed mold half by means of a pressing mold half; under this pressed condition hot and humid air is supplied into the fixed mold half and forcibly injected from the inside of the fixed mold half into the adherent materials for a predetermined period of time; whereupon the adhesive is softened and caused to diffuse into the adherent materials; the hot and humid air is then turned to cool air which is injected into the adherent materials from the inside of the fixed mold half; whereupon the adhesive is cured to complete the adhesive bonding and molding; the so produce seat product is demolded and another assembly of semi-finished seat product is introduced.

The hot and humid air as well as cool air are prepared from ambient air by means of an air treating equipment (an air conditioner). The air treating equipment includes a fin tube heat exchanger (a heating coil) through which a thermal medium of a high temperature is caused to flow, a fin tube heat exchanger (a cooling coil) through which a thermal medium of a low temperature is caused to flow, a humidity supplier and fans. The hot and humid air can be prepared by passing ambient air through the heating coil and humidity supplier, while the cool air is prepared by passing ambient air through the cooling coil. The so prepared hot humid air and cool air are alternately supplied by means of the fans to the above-mentioned presser at a predetermined time interval. In other words, every step of adhesive bonding and molding in the presser requires heating and wetting cycle and cooling cycle in the air treating equipment.

EP-A-0227202 discloses same apparatus as above except that the hot and humid air are prepared in a steam generator and the cooling is occurred by vacuum means. Accordingly, it is known in this field that the heating is conducted by introducing a hot and humid air into the hollow mold and the cooling is conducted by exhausting a fluid from the hollow mold.

### Object of the Invention

For sending the hot humid air and the cool air prepared by the air treating equipment into the mold, fans of a large power are required. This is because air is blown into closed spaces in the mold and in turn in the semi-finished seat product of an increased static pressure, which may invite ring blow of the fans.

Furthermore, since the air treating equipment used must be provided with the humidity supplier (steam injector) in addition to the heating and cooling coils, it is necessarily of a large size requiring a large space for installation. In addition, a cold heat source is required for preparing cool air.

Moreover, since quick exchange and alternate sending of hot humid air and cool air is not technically easy, there remains a problem on a good response of the heating and cooling cycles of the air treating equipment in accordance with a production speed of seats in the production line. Thus, an enhanced productivity is not frequently achieved.

In the apparatus disclosed in EP-A-0227202, a steam generator would be installed near the apparatus. Nevertheless, the temperature control of the steam to obtain the desired heating temperature of the each seat product would not be done in an accurate manner.

For the reasons set forth above, with the prior art apparatus for producing seat products, its response performance is limited considering its size, and therefore, an improvement has been desired.

An object of the invention is to solve the above discussed problems associated with the prior art

### Disclosure of the Invention

According to the invention, there is provided an apparatus for adhesive bonding and molding a semi-finished seat product as disclosed in claim 1.

### Brief Description of the Drawings

Fig. 1 is a schematic cross-sectional diagram for illustrating an example of the apparatus according to the invention for adhesively bonding and molding seat products;
Fig. 2 is a schematic cross-sectional view showing a principal part of the mold for adhesively bonding and molding seat products according to the invention;
Fig. 3 is a perspective view showing upper parts of a hollow mold half;
Fig. 4 is a perspective view of a nozzle to be installed in a perforated plate of the hollow mold half;
Fig. 5 is a cross-sectional view of the perforated plate of the hollow mold half fitted with the nozzle;
Fig. 6 is a deal drawing of a semi-finished seat product;
Fig. 7 is an assembly drawing of the semi-finished seat product; and
Fig. 8 is a partial cross-sectional view of metal fittings for mutually securing an inner and outer materials of the semi-finished seat product.

### Example

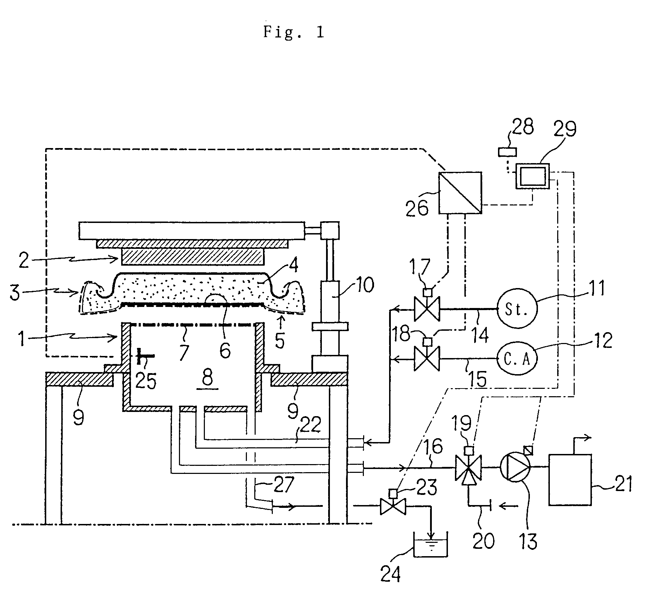

Fig. 1 illustrates an example of an apparatus according to the invention in which a semi-finished seat product 3 is adhesively bonded and molded to an automobile seat product between a hollow mold half 1 and a pressing mold half 2. While the semi-finished seat product 3 will be described hereinafter in detail, it comprises an inner seat material 4 composed of a foamed polyurethane resin and an outer seat material 5 composed of a fabric, with a reactive hot melt adhesive 6 interposed between the inner and outer seat materials.

A side of the hollow mold half 1 which is to be in contact with the semi-finished seat produce 3 is constituted with a perforated plate 7, while other sides are constituted with solid metal plates having no perforations except for those for communication with pipings. An inner space 8 is defined by these plates. The entity of the hollow mold half 1 is removably fixed on a pedestal 9. At least the perforated side plate 7 is made of metallic aluminum.

The pressing mold half 2 is for downward pressing the semi-finished seat product 3 placed on the hollow mold half 1 with a predetermined pressure. The up and down movement of the pressing mold half 2 is carried out by a driving mechanism including an air cylinder 10. While a vertically driven pressing mold half 2 is illustrated, a pressing mold half may be one side supported so that it may be pivotally driven around the supported side. Any way, it is sufficient that the pressing mold half 2 can press the semi-finished seat product 3 placed on the hollow mold half 1 with a predetermined plane pressure during the adhesive bonding and molding of the semi-finished seat product 3 to final seat product. The hollow mold half 1 and the pressing mold half 2 are removably mounted on respective fixed supporting members so that their contours and size may correspond to those of the semi-finished seat product to be processed.

Such a presser (mold) comprising the hollow mold half 1 and the pressing mold half 2 is installed in a production line of the seat manufacturing factory and near the presser a steam source 11 and a compressed air source 12 are provided. The steam source 11 and the compressed air source may be a steam main pipe and compressed air pipe, respectively, which are circulating in the factory. An exhaust source 13 which may be a vacuum pump is also provided near the presser.

The inner space 8 of the hollow mold half 1 is communicated with the steam source 11, compressed air source 12 and exhaust source 13, via a steam piping 14, compressed air piping 15 and exhaust piping 16, respectively. The steam piping 14 is provided with a valve 17 for controlling a flow of steam introduced to the inner space 8 of the hollow mold half 1 (referred to herein as a steam valve 17). The compressed air piping 15 provided with a valve 18 for controlling a flow of compressed air introduced to the inner space 8 of the hollow mold half 1 (referred to herein as an air valve 17). The exhaust piping 16 is provided with a valve 19 for controlling exhaust withdrawn from the inner space 8 of the hollow mold half 1 (referred to herein as an exhaust valve 19) . While the valves 17, 18 and 19 we used are electromagnetic automatic valves, pneumatic automatic valves may also be used.

The exhaust valve 19 we used is a three-way valve, whose one way is connected to a piping 20 for sucking ambient air. An exhaust which has been sucked by the exhaust source, vacuum pump 13, enters a tank 21 where accompanying drain is separated, and thereafter allowed to escape outside the system.

In the illustrated example, the steam piping 14 and compressed air piping 15 are combined together to form a single piping 22 at downstream of the steam valve 17 and air valve 18 so that a mixture of steam and compressed air (hot humid air) is introduced into the inner space 8 of the hollow mold half 1. At the bottom of the inner space 8 of the hollow mold half 1, there is provided a piping 27 for withdrawing drain which is via an open and close valve 23 (referred to herein as a drain valve) connected to a drainage groove 24.

The hollow mold half 1 is provided with a temperature detector 25 at a position suitable for detecting a temperature of an atmosphere in the inner space 8. The detected temperature signal is transmitted to a temperature adjuster 26, which turns out an operation signal or signals if the transmitted temperature signal is outside a preset temperature range. In this example, the temperature adjuster 26 puts out signals and transmits them to the steam and air valves 17 and 18 for operating degrees of opening of these valves, when the temperature signal transmitted from the temperature detector 25 is outside the preset temperature range. These instruments and associated fittings therewith constitute a first control means. When the detected temperature of the inner space is lower than the preset value, a ratio of the degree of opening of the steam valve 17 to the degree of opening of the air valve 18 is increased so as to raise a temperature of the hot humid air, whereas when the detected temperature is higher than the preset value, the above-mentioned ratio of the degrees of opening of the valves is decreased so as to lower the temperature of the hot humid air. The valves 17 and 18 are controlled so that a necessary amount of flow of the hot humid air may be ensured and the temperature of the hot humid air may be within the preset range.

On the other hand, a control panel 29 having a timer 28 installed is provided. The control panel 29 repeatedly issues instructions at predetermined time intervals; first, to keep the exhaust valve 19 closed when the steam valve 17 and air valve 18 are kept open; second, after this condition has been maintained for a predetermined period of time, to close the steam valve 17 and air valve 18, to open the exhaust valve 18 and to drive the vacuum pump 13; and third, after this condition has been maintained for a predetermined period of time, to open the steam valve 17 and air valve 18, to close the exhaust valve 18 and to stop driving of the vacuum pump 13. These instruments and associated fittings therewith constitute a second control means. Alternatively, the vacuum pump 13 may be kept driven, even when the exhaust valve 19 is closed. In this case, however, the third piping 20 connected to the exhaust valve 19 should be kept open. Incidentally, the drain valve 23 is kept closed during the heating time when the steam valve 17 and air valve 18 are opened and during the cooling time when the exhaust valve 19 is opened. It may be opened at other times.

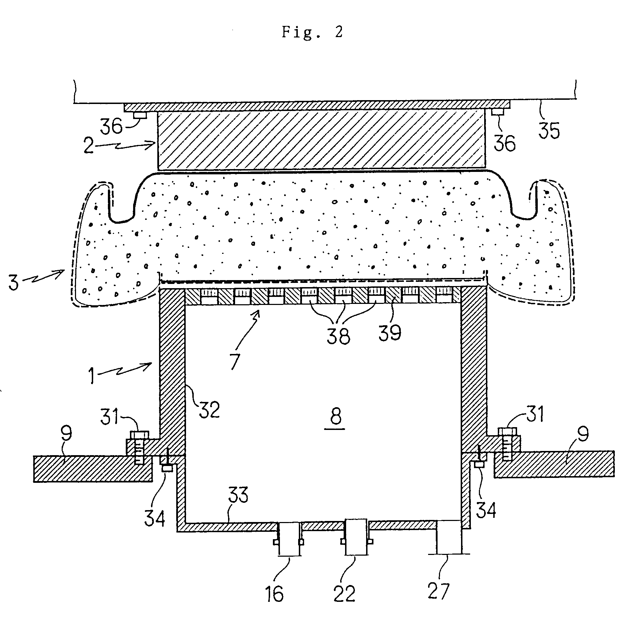

Fig. 2 shows a mold fitted up in place. It further shows details of a perforated plate 7 of the hollow mold half 1. The hollow mold half 1 comprises an upper structure 32 which is removably fixed to a pedestal 9 by means of bolts 31, and a lower structure 33 which is removably fixed to the upper structure 32 by means of bolts 34. The upper side of the upper structure 32 is constituted by a perforated plate 7. To the bottom of the lower structure 33 there are connected a piping 22 for supplying hot humid air and a drain pipe 27. The upper and lower structures may changed in accordance with the shape and size of the semi-finished seat material to be processed. The pressing mold half 2 is also removably fixed on an upper pedestal 35 by means of volts 36.

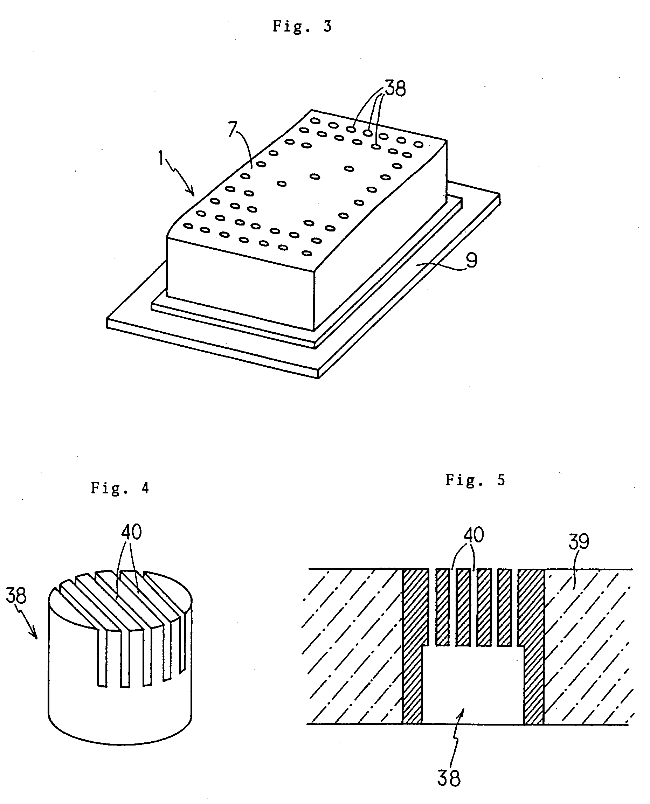

The perforated plate 7 of the hollow mold half 1, which plate is to be in contact with the semi-finished seat product 3, is constructed by putting many nozzles 38 each having a plurality of slits on a metallic plate 39 with a predetermined distance between adjacent nozzles. The structure of the perforated plate 7 will be further illustrated with reference to Figs. 3-5.

Fig. 3 shows the upper part (the upper structure 32) of the hollow mold half 1 where the perforated plate 7 having many nozzles 38 put thereon with almost the same intervals is mounted. As shown in Figs. 4 and 5, each nozzle 38 comprises a metal cylinder of a small diameter (an outer diameter of about 10 mm) with its bottom open and having a plurality of slits 40 cut through its top end part. The perforated plate 7 can be prepared by fitting the nozzles 38 in perforations formed through the metal plate 39. Each nozzle 38 and the metal plate 39 are composed of aluminum.

During the heating cycle, hot humid air is blown through the slits 40 of the nozzles 38 against the semi-finished seat product 3 which is placed on and in contact with the perforated plate 7, whereas during the cooling cycle the semi-finished seat product 3 is subjected to a sucking action. Accordingly, if the semi-finished seat product 3 is a laminate composed of a layer of the gas permeable fibrous outer seat material which is in contact with the perforated plate 7, a layer of the reactive hot melt adhesive and a layer of the porous foamed inner seat material, during the heating cycle the adhesive comes in direct contacts with the hot humid air coming through the layer of outer seat material, thereby it is softened, reacts and develops an adhesive function. During the cooling cycle, air in the inner seat material layer is sucked through the outer seat material layer; this suction is accompanied by suction of ambient air into the semi-finished seat material 3; and the adhesive is cooled to ambient temperature and cured by the passage of ambient air through the semi-finished seat material 3.

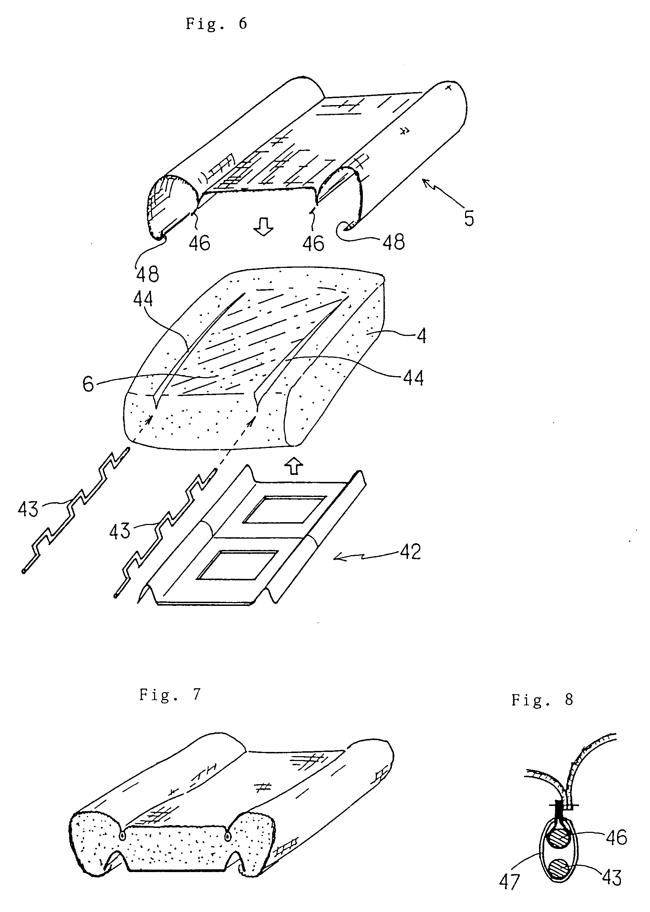

Figs. 6 and 7 are deal and assembly drawings, respectively, of the semi-finished seat product 3. The illustrated semi-finished seat product 3 is for the production of that part of an automobile seat where a passenger sits down. That part of the seat to which the passenger reclines is separately produced. In Figs. 6 and 7, the reference numeral 4 designates the inner seat material, 5 the outer seat material, 42 a frame, and 43 a core wire. The inner seat material 4 is a foamed polyurethane resin, and the outer seat material 5 is a laminate comprising a thin urethane slab pad having a thickness of not exceeding about 10 mm, a relatively thick fabric sticked on its right side and a tricot fabric sticked on its back side.

The inner seat material 4 is provided with two parallel notches 44 on its right side and has two core wires 43 each inserted into each notch 44. The core wire 43 has hollowed and protruded portions alternately along its length, and mechanically preformed to such a configuration. The core wires 43 are inserted into the polyurethane resin prior to foaming and molding of the resin. The hollowed portions of the core wire 43 are buried in the resin while the protruded portions appear in the notch 44. The outer seat material 5 is provided with two straight core metals 46 at positions corresponding to those of the notches 44 of the inner seat material 4.

Upon assembling the semi-finished seat product 3, the inner seat material 4 having the core wires 43 inserted and having the frame 42 abutted on its back side is covered on its whole right side with the outer seat material 5; each protruded portion of the core wire 43 appearing in the notch 44 of the inner seat material 4 and a portion of the core metal 46 of the outer seat material 5 are fastened together with a clip 47 (see Fig. 8); and both edge portions 48 of outer seat material 5 are brought in engagement with edge portions of the frame 42. Prior to assembling the semi-finished seat product 3, A front surface of the inner seat material 4 is coated with the reactive hot melt adhesive 6 prior to assembling the semi-finished seat product 3, as shown by hatching in Fig. 6. The coated adhesive does no develop an adhesive function even if it contacts the outer seat material 5 at ambient temperature.

The assembled semi-finished seat product 3 shown in Fig. 7 is turned upside down and placed in position in the mold (see Figs. 1 and 2). In other words, Figs. 1 and 2 show the semi-finished seat product 3 which is placed in the mold so that the layer of the adhesive faces to the hollow mold half 1 via the outer seat material 5. The assemblies as shown in Fig. 7 may be previously prepared and may be successively placed in the mold one by one for processing. Alternately, each assembly may be prepared near the hollow mold half 1 immediately before it is processed.

One semi-finished seat product is subjected to a production cycle wherein it is placed in position in the mold, adhesively bonded and molded to a final product and demolded. Thereafter, another semi-finished seat product is subjected to the same production cycle. In this way, seat products are successively produced on the production line.

Operation of the apparatus according to the invention during the production cycle will now be described. First, the pressing mold half 2 presses the semi-finished seat product placed on the hollow mold half 1. By this pressing a time limit switch (not shown) is acutuated and the steam and air valves !7 and 18 are opened in accordance with instructions from the timer 28 and the temperature adjuster 26 controls degrees of opening of the steam and air valves !7 and 18 so that the temperature value detected by the temperature detector 25 becomes a preset value. In one example, the steam pressure was 1.08 kg/cm², the compressed air pressure was 5.0 kg/cm² and the preset temperature was 60 °C. During the above-mentioned operation, while a way to the piping 20 of the three way exhaust valve 19 for sucking ambient air is kept open, a way the piping 16 communicating with the inner space 8 is kept closed. Accordingly, the inner space 8 is not exhausted although the vacuum pump 13 continues to be driven. Furthermore, the drain valve 23 is kept closed during the above-mentioned operation.

By the above-mentioned operation, hot humid air having a temperature of 60 °C. is introduced into the inner space 8 and injected through the slits 40 of the nozzles 38 of the perforated plate 7 into the pressed semi-finished seat product 3, whereby the intended adhesive bonding and molding can be performed.

At the end of the predetermined period of time which is set by the timer 28, the timer 28 puts out an instruction to the temperature adjuster 26 to close the steam and air valves 17 and 18 and an instruction to the exhaust valve 19 to open its way to the piping 16. Thus, the valves 17 and 18 are closed and the valve 19 is turned so that the piping 16 communicates with the vacuum pump 13. At once, air in the inner space 8 of the hollow mold half 1 is exhausted and the pressure in the inner space 8 is reduced, causing the hot humid air in the semi-finished seat product 3 to flow into the inner space 8 through the slits 40 of the nozzles 38 of the perforated plate 7 as well as causing ambient air to flow into the inner space 8 through the product being processed and the perforated plate 7. The product being processed is cooled by this passage of ambient air therethrough. At the end of the predetermined period of cooling time which is set by the timer 28, the exhaust valve 19 is turned so that its way to the piping 20 for sucking ambient air is in communication with the vacuum pump 13; the pressing mold half 2 is upwardly moved; and the product is removed form the hollow mold half 1 to complete one production cycle. If desired, before the next production cycle is started, the drain valve 23 may be opened to remove drain remaining in the system.

While in the illustrated example, the fixed lower mold half is hollow, it is possible to construct the pressing mold half hollow by which the heating and cooling operations may be carried out. Furthermore, although it is preferred as illustrated to connect the steam and compressed air pipings 14 and 15 to the main pipe 22 thereby mixing steam and compressed air and introducing the resultant hot humid air into the inner space 8 via the main pipe 22, it is possible to independently connect the steam and compressed air pipings 14 and 15 to the inner space 8.

Thus, in the apparatus according to the invention, pressurized hot humid air can be instantaneously introduced into the hollow mold half 1 to carry out heating and wetting, and ambient air can be instantaneously sucked for a cooling purpose simply by switching to the vacuum pump. Accordingly, by the apparatus according to the invention, the heating and cooling cycles can be controlled within a short period of time and the working temperature can be precisely controlled. Furthermore, the direct injection of steam involved provides improved ability of wetting adhesive. In addition, the equipment used herein for the supply of hot humid air is compact requiring a small space, and be easily changed or remodeled in accordance with changes of the production line. Thus, in a production line of an automobile seat manufacturing factory, the apparatus according to the invention greatly contributes to the productivity and quality of products.beyond a limit of the prior art apparatus wherein hot humid air and cool air prepared by air conditioners are alternately supplied by blowers.

## Claims

1. An apparatus for adhesive bonding and molding a semi-finished seat product (3) comprising a mold composed of a hollow mold half (1) having an inner space (8) and a pressing mold half (2), the surface of said hollow mold half (1) to be in contact with the semi-finished seat product (3) being perforated, said apparatus further comprising a steam piping (14) with a steam valve (17) for connecting the inner space (8) of said hollow mold half (1) to a steam source (11), wherein the semi-finished seat product (3) comprising an inner seat material (4), an outer seat material (5) and a thermosoftening adhesive (6) interposed between said inner and outer seat materials is adhesively bonded and molded in the mold by heating and cooling said semi-finished seat product (3), the heating being conducted by introducing a hot and humid air into the hollow mold half (1) and the cooling being conducted by exhausting a fluid from the hollow mold half (1), the apparatus being characterized in that it further comprises
a compressed air piping (15) with a compressed air valve (18) for connecting the inner space of said hollow half to a compressed air source and an exhaust piping (16) with an exhaust valve (19) for connecting the inner space (8) of said hollow mold half (1) to an exhaust source (13),
said apparatus is provided with a first control means for controlling degrees of opening of said steam valve (17) and compressed air valve (18) so that a temperature in the inner space (8) of said hollow mold half (1) may become a preset value, and
said apparatus is further provided with a second control means for controlling opening and closing operation of said valves (17) (18) (19) so that an operation of opening said exhaust valve (19) when said steam and compressed air valves (17) (18) are closed and an operation of opening said steam and compressed air valves (17) (18) when said exhaust valve (19) is closed may be carried out alternately.

2. The apparatus according to claim 1 wherein said semi-finished seat product (3) is intended for producing an automobile seat and the inner seat material of said semi-finished seat product is composed of a foamed polyurethane resin.

3. The apparatus according to claim 1 or 2 wherein said steam piping (14) and said compressed air piping are combined together to form a single piping downstream from said steam valve (17) and said air valve (18).

## Patentansprüche

1. Vorrichtung zum Haftverbinden bzw. Verkleben und Formen eines halbfertigen Sitzproduktes (3), wobei die Vorrichtung folgendes aufweist:
eine Form, die aus einer hohlen Formhälfte (1) mit einem Innenraum (8) und einer Pressformhälfte (2) besteht, wobei die Oberfläche der hohlen Formhälfte (1), die mit dem halbfertigen Sitzprodukt (3) in Kontakt kommt, perforiert bzw. durchlöchert ist,
wobei die Vorrichtung ferner eine Dampfleitung (14) aufweist mit einem Dampfventil (17) zum Verbinden des Innenraums (8) der hohlen Formhälfte (1) mit einer Dampfquelle (11),
wobei das halbfertige Sitzprodukt (3), das ein inneres Sitzmaterial (4), ein äußeres Sitzmaterial (5) und einen thermoplastischen bzw. bei Wärme weich werdenden Haftstoff bzw. Kleber (6) zwischen den inneren und äußeren Sitzmaterialien aufweist, in der Form haftverbunden bzw. verklebt und geformt wird durch Erwärmen und Abkühlen des halbfertigen Sitzproduktes (3), wobei das Erwärmen durchgeführt wird durch Einführen von heißer, feuchter Luft in die hohle Formhälfte (1) und wobei das Abkühlen durchgeführt wird durch Ablassen eines Strömungsmittels aus der hohlen Formhälfte (1),
wobei die Vorrichtung dadurch gekennzeichnet ist, daß sie ferner folgendes aufweist:
eine Druckluftleitung (15) mit einem Druckluftventil (18) zum Verbinden des Innenraums der hohlen Hälfte mit einer Druckluftquelle, und
eine Auslaßleitung (16) mit einem Auslaßventil (19) zum Verbinden des Innenraums (8) der hohlen Formhälfte (1) mit einer Auslaßquelle (13),
wobei die Vorrichtung mit ersten Steuermitteln versehen ist zum Steuern der Öffnungsgrade des Dampfventils (17) und des Druckluftventils (18), so daß eine Temperatur im Innenraum (8) der hohlen Formhälfte (1) auf einen voreingestellten Wert gebracht werden kann, und
wobei die Vorrichtung ferner mit zweiten Steuermitteln versehen ist zum Steuern der Öffnungs- und Schließvorgänge der Ventile (17, 18, 19), so daß abwechselnd das Ablaßventil (19) geöffnet ist, wenn das Dampfventil (17) und das Druckluftventil (18) geschlossen sind, und das Dampfventil (17) und das Druckluftventil (18) geöffnet sind, wenn das Auslaßventil (19) geschlossen ist.

2. Vorrichtung gemäß Anspruch 1, wobei das halbfertige Sitzprodukt (3) zur Herstellung eines Automobil-Sitzes dient und das innere Sitzmaterial des halbfertigen Sitzproduktes aus einem aufgeschäumten Polyurethanharz besteht.

3. Vorrichtung gemäß Anspruch 1 oder 2, wobei die Dampfleitung (14) und die Druckluftleitung miteinander kombiniert sind, um stromabwärts von dem Dampfventil (17 und dem Druckluftventil (18) eine einzige Leitung zu bilden.

## Revendications

1. Appareil de collage et de moulage d'un produit de siège semi-fini (3) comprenant un moule constitué d'un demi-moule creux (1) comportant un espace interne (8) et d'un demi-moule de pression (2), la surface du demi-moule creux (1) destinée à être en contact avec le produit de siège (3) étant perforée, cet appareil comprenant en outre une conduite de vapeur (14) munie d'une vanne de vapeur (17) pour relier l'espace interne (8) du demi-moule creux (1) à une source de vapeur (11), dans lequel le produit de siège (3) comprend un matériau de siège interne (4), un matériau de siège externe (5) et un adhésif thermoadoucissable (6) interposé entre les matériaux de siège interne et externe est collé et moulé dans le moule par chauffage refroidissement du produit de siège (3), le chauffage étant réalisé en introduisant de l'air chaud et humide dans le demi-moule creux (1) et le refroidissement étant effectué en laissant s'échapper un fluide du demi-moule creux (1), l'appareil étant caractérisé en ce qu'il comprend en outre :
une conduite d'air comprimé (15) associée à une vanne d'air comprimé (18) pour relier l'espace interne du demi-moule creux à une source d'air comprimé, et une conduite d'échappement (16) munie d'une vanne d'échappement (19) pour relier l'espace interne (8) du demi-moule creux (1) à une source d'échappement (13),
l'appareil étant muni d'un premier moyen de commande pour commander le niveau d'ouverture de la vanne de vapeur (17) et de la vanne d'air comprimé (18) de sorte que la température dans l'espace interne (8) du demi-moule creux (1) puisse atteindre une valeur prédéterminée, et
l'appareil étant en outre muni d'un second moyen de commande pour commander les opérations d'ouverture et de fermeture des vannes (17, 18, 19) de sorte qu'une opération d'ouverture de la vanne d'échappement (19) quand les vannes de vapeur et d'air comprimé (17, 18) sont fermées et une opération d'ouverture des vannes de vapeur et d'air comprimé (17, 18) quand la vanne d'échappement (19) est fermée peuvent être réalisées de façon alternée.

2. Appareil selon la revendication 1, dans lequel le produit de siège (3) est destiné à produire un siège d'automobile et le matériau de siège interne du produit de siège est constitué d'une résine de polyuréthanne.

3. Appareil selon la revendication 1 ou 2, dans lequel la conduite de vapeur (14) et la conduite d'air comprimé sont combinées l'une à l'autre pour former une conduite unique en aval de la vanne de vapeur (17) et de la vanne d'air (18).
